# EUROPÄISCHE PATENTSCHRIFT

(11) **EP 0 598 775 B1**
(45) Veröffentlichungstag und Bekanntmachung des Hinweises auf die Patenterteilung: **27.03.1996**
(21) Anmeldenummer: 92916892.0
(22) Anmeldetag: 11.08.1992
(51) Int. Cl.: G21D 1/02

(54) **AUSGLEICHSBEHÄLTER-ANORDNUNG, INSBESONDERE FÜR KÜHLKREISLÄUFE IN KERNKRAFTWERKEN**
EQUALIZING RESERVOIR ARRANGEMENT, ESPECIALLY FOR THE COOLING CIRCUITS IN NUCLEAR POWER STATIONS
SYSTEME DE RESERVOIR DE COMPENSATION, EN PARTICULIER POUR LES CIRCUITS DE REFROIDISSEMENT DES CENTRALES NUCLEAIRES

(30) Priorität: 13.08.1991 DE 4126758
(43) Veröffentlichungstag der Anmeldung: 01.06.1994
(73) Patentinhaber: SIEMENS AKTIENGESELLSCHAFT, D-80333 München (DE)
(72) Erfinder: HRISTODULIDIS, Adonios, D-8000 München 40 (DE)
(86) Internationale Anmeldenummer: DE9200666
(87) Internationale Veröffentlichungsnummer: WO9304483

(56) Entgegenhaltungen:
- DE-A- 2 951 458
- DE-A- 3 902 258
- DE-B- 1 061 989
- DATABASE WPIL, Section Ch, Week 8351, Derwent Publications Ltd., London, GB; Class J06, SN 83-849060 & SU-A-998 238

## Beschreibung

Die Erfindung bezieht sich auf eine Ausgleichsbehälter-Anordnung für Flüssigkeitskreisläufe mit Volumen- und/oder Druckschwankungen, insbesondere für Kühlkreisläufe in Kernkraftwerken.

Offene Kühlkreisläufe in Kernkraftwerken, z.B. Zwischenkühlkreisläufe in Druckwasserkernkraftwerken, benötigen zur Aufnahme von betrieblich bedingten Volumenschwankungen des Kühlmediums Ausgleichsbehälter, welche Flüssigkeit aufnehmen bzw. abgeben können. Damit es dabei zu keinen unzulässigen Druckschwankungen im System kommt, müssen diese Ausgleichsbehälter einerseits mit der Atmosphäre verbunden sein, um "atmen" zu können und gegebenenfalls einen Überlauf zu gewährleisten. Andererseits soll aber ein direkter Zutritt der Außenluft zu der im Ausgleichsbehälter enthaltenen Flüssigkeit verhindert sein, damit keine chemischen Reaktionen mit der Außenluft und dem Kühlwasser im Behälter ablaufen können. Im Kühlwasser ist aus Korrosionsschutzgründen im allgemeinen Hydrazin enthalten, welches durch das Kohlendioxid und den Sauerstoff der Luft abgebaut werden könnte.

Durch die DE-C2-29 51 458 ist ein Ausgleichsbehälter, insbesondere für Flüssigkeitskreisläufe mit Volumenschwankungen in Kernkraftwerken, bekannt, der einen Flüssigkeitsraum aufweist. Dieser ist mit dem Flüssigkeitskreislauf über eine vom Boden des Behälters ausgehende Flüssigkeitsleitung verbunden. Über dem Flüssigkeitsraum liegt ein Gasraum oder Gaspolsterraum. Der Flüssigkeitsraum des Ausgleichsbehälters kommuniziert mit einem Flüssigkeitssteigrohr, welches sich mindestens in die maximale Höhe der Oberseite des Ausgleichsbehälters erstreckt und eine luftabschließende Wasservorlage enthält. Das Flüssigkeitssteigrohr ist insbesondere S-förmig gebogen, d.h. das obere Ende des Steigrohrs ist U-förmig ausgebildet. Dadurch wird das Hineinfallen von Verschmutzungen verhindert und das Auffangen überlaufender Flüssigkeitsmengen ermöglicht.

Die Erfindung geht von der Überlegung aus, daß beim bekannten Ausgleichsbehälter das durch das Flüssigkeitssteigrohr gegebene Ausgleichsvolumen noch verhältnismäßig klein ist. Die Niveauüberwachung des Ausgleichsbehälters ist deshalb verhältnismäßig aufwendig, weil unter allen Umständen ein Leersaugen des Flüssigkeitssteigrohres bei Druckschwankungen in Richtung Unterdruck und damit einem Absinken des Spiegels der Wasservorlage im Ausgleichsbehälter vermieden werden soll. Das S-förmig gebogene Flüssigkeitssteigrohr, welches sich seitlich und in einen Raum oberhalb des Behälters erstreckt, benötigt verhältnismäßig viel Aufnahmevolumen, der in engen Zwischenräumen eines Kernkraftwerkes nicht immer zur Verfügung steht.

Der Erfindung liegt die Aufgabe zugrunde, eine Ausgleichsbehälter-Anordnung für Flüssigkeitskreisläufe mit Volumen und/ oder Druckschwankungen der eingangs definierten Art zu schaffen, welche ein Ausgleichsstandrohr aufweist, das wesentlich platzsparender angeordnet werden kann und welches ein wesentlich größeres Speichervolumen als beim Bekannten aufweist, so daß sich die Niveauüberwachung des Flüssigkeitsstandes im Ausgleichsbehälter einfacher gestalten und sich in jedem Fall ein Luftabschluß erreichen läßt.

Zur Lösung der gestellten Aufgabe ist die Erfindung durch die folgenden Merkmale gekennzeichnet:
a) Der Ausgleichsbehälter steht über eine bodenseitig angeschlossene Flüssigkeitsleitung mit dem Flüssigkeitskreislauf in Verbindung, so daß sich im Ausgleichsbehälter ein unterer Flüssigkeitsraum und ein oberer Gaspolsterraum ausbilden,
b) in den Gaspolsterraum mündet mit seinem oberen Ende ein Ausgleichsstandrohr, welches in ein unterhalb des Ausgleichsbehälters angeordnetes, mit einer luftabschließenden den Wasservorlage gefülltes U-Rohr ausläuft.

Vorteilhafte Weiterbildungen sind in den Ansprüchen 2 bis 5 angegeben.

Die mit der Erfindung erzielbaren Vorteile sind vor allem darin zu sehen, daß die Montagearbeiten für die neue Ausgleichsbehälter-Anordnung zum größten Teil in leicht zugänglichen Räumen durchgeführt werden können, weil sich das Ausgleichsstandrohr vom Behälter tief nach unten erstreckt, z.B. 25 m, bis es in das mit der luftabschließenden Wasservorlage gefüllte U-Rohr übergeht.

Gemäß einer Weiterbildung der Erfindung sind eine Meßeinrichtung zur Überwachung des Pegelstandes der Wasservorlage im U-Rohr und eine meßwertabhängig betätigbare Einspeiseeinrichtung zur Einspeisung von Nachfüllwasser in das U-Rohr über ein Einspeiseventil, wenn der Pegelstand unter einen Sollwert sinkt, vorgesehen. Auf diese Weise ist immer ein Luftabschluß gewährleistet. Das U-Rohr kann getrennt vom Ausgleichsstandrohr in leicht zugänglichen Räumen installiert werden. Dies zum einen wegen des großen Abstandes zum Ausgleichsbehälter, zum anderen deshalb, weil keine Flüssigkeitsverbindung zwischen Ausgleichsbehälter und U-Rohr besteht. Diese Montageerleichterung ist insbesondere bei der Nachrüstung von bestehenden Anlagen von großem Vorteil. Das verlängerte Ausgleichsstandrohr unterliegt praktisch keiner Einschränkung bezüglich Länge, Querschnitt und Verlauf.

Eine günstige Ausbildung zur Vergrößerung des Gasspeichervolumens besteht gemäß Anspruch 3 darin, daß zwischen dem Ausgleichsstandrohr und dem U-Rohr ein das Gasvolumen des Ausgleichsstandrohres vergrößernder Zwischenbehälter angeschlossen ist. Das U-Rohr hat z.B. eine Höhe von 5 m, der Ausgleichsbehälter selbst, der im allgemeinen in einer Schräglage montiert wird, überspannt eine Höhendifferenz von z.B. 8 bis 10 m.

Weitere Merkmale und Vorteile der Erfindung sowie ihre Wirkungsweise werden im folgenden anhand der Zeichnung noch näher erläutert, in welcher zwei Ausführungsbeispiele nach der Erfindung dargestellt sind. In der Zeichnung zeigt in vereinfachter, schematischer Darstellung:

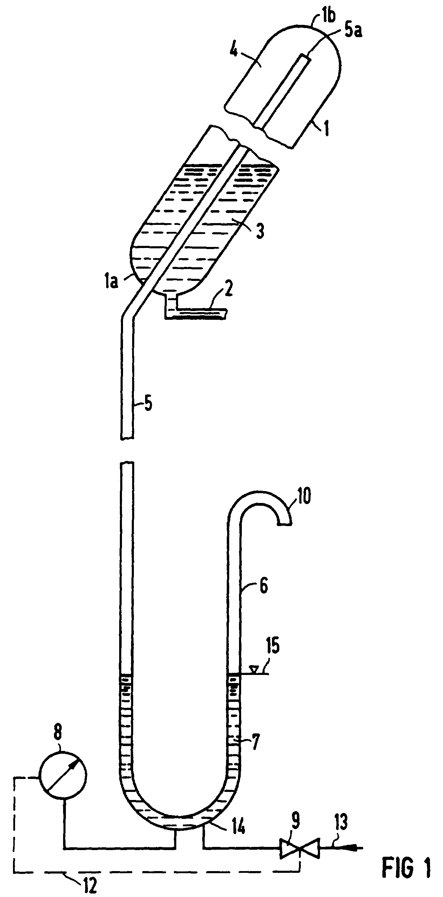

Figur 1 einen Ausgleichsbehälter mit Ausgleichsstandrohr in seinem Inneren, welches durch den Behälterboden nach unten zu einem die luftabschließende Wasservorlage enthaltenden U-Rohr verläuft,

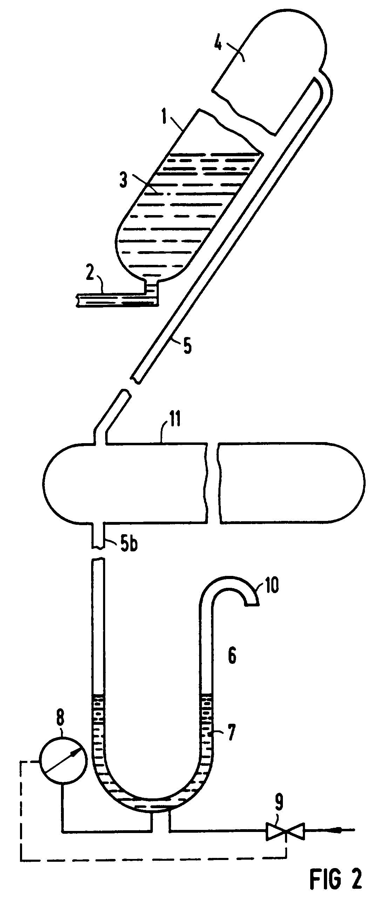

Figur 2 ein zweites Ausführungsbeispiel, bei welchem das Ausgleichsstandrohr als eine an den Ausgleichsbehälter in dessen oberen, den Gaspolsterraum umschließenden Bereich angeschlossene Verbindungsleitung ausgeführt ist, welche mit Gefälle zu einem das Speichervolumen vergrößernden Zwischenbehälter verlegt ist, wobei sich an die Unterseite des Zwischenbehälters das U-Rohr über eine Verbindungsleitung anschließt.

Nach Figur 1 steht der Ausgleichsbehälter 1 über eine bodenseitig angeschlossene Flüssigkeitsleitung 2 mit dem Flüssigkeitskreislauf einer nicht näher dargestellten Kernreaktor- anlage in Verbindung. Bei dem Flüssigkeitskreislauf kann es sich um einen Zwischenkühlkreislauf handeln. Der Ausgleichsbehälter ist so angeordnet, daß sich in ihm ein unterer Flüssigkeitsraum 3 und ein oberer Gaspolsterraum 4 ausbilden. In den Gaspolsterraum 4 mündet mit seinem oberen Ende ein Ausgleichsstandrohr 5, welches in ein unterhalb des Ausgleichsbehälters 1 angeordnetes, mit einer luftabschließenden Wasservorlage 7 gefülltes U-Rohr 6 ausläuft. Letzteres weist ein nach unten gekrümmtes U-förmiges Ende in Gestalt eines gebogenen Auslaufs 10 auf. Mit einer Meßeinrichtung 8 kann der Pegelstand der luftabschließenden Wasservorlage 7 durch Messung der Wassersäule überwacht werden. Die Meßeinrichtung 8 steht in Wirkverbindung mit einem fernbetätigbaren Einspeiseventil 9, wie es durch die gestrichelte Wirkungslinie 12 symbolisiert ist, derart, daß unter einem Vordruck stehendes Nachfüllwasser aus der Leitung 13 über das Ventil 9 in das U-Rohr 6 über den Anschluß 14 eingespeist werden kann, wenn der Pegelstand 15 unter einen Sollwert sinkt.

Der Flüssigkeitsraum 3 im Ausgleichsbehälter 1 unterliegt systembedingten Volumenschwankungen. Die Flüssigkeit im Flüssigkeitsraum 3 ist im allgemeinen sogenanntes Deionat; darüber befindet sich, den Volumenschwankungen des Flüssigkeitsraums 3 folgend, der Gaspolsterraum 4. Das U-Rohr 6 kann den baulichen Gegebenheiten entsprechend weit entfernt und wesentlich tiefer als der Ausgleichsbehälter 1, z.B. etwa 40 m, als das obere Ende des Ausgleichsstandrohres 5 installiert sein. Das U-Rohr ist zur Vermeidung des Zutritts von Außenluft zur Systemflüssigkeit bis zu einer gewissen Höhe (Spiegelhöhe 15) mit Sperrflüssigkeit 7 gefüllt, die vorzugsweise identisch mit der Systemflüssigkeit ist. Bei starkem Überdruck im Ausgleichsbehälter 1 ist ein Überlaufen der Sperrflüssigkeit 7 durch den Auslauf 10 vorgesehen. Das Ausgleichsstandrohr 5 ist durch den Boden la des Ausgleichsbehälters 1 dichtend hindurchgeführt und erstreckt sich im Ausgleichsbehälter 1 durch den Flüssigkeitsraum 3 und den Gaspolsterraum 4 hindurch, so daß es mit seinem offenen Ende 5a nahe an der Deckwand 1b des Ausgleichsbehälters 1 endet.

Im Beispiel nach Figur 2 ist zwischen dem Ausgleichsstandrohr 5 und dem U-Rohr 6 ein das Gasvolumen des Ausgleichsstandrohrs 5 vergrößernder Zwischenbehälter 11 angeschlossen, der in liegender Bauweise installiert ist. Es könnte sich auch um einen in stehender Bauweise angeordneten Zwischenbehälter 11 handeln. Durch das vergrößerte, komprimierbare Gasvolumen werden Druckschwankungen im System gemildert. Zur Vermeidung von Stauflüssigkeit im Zwischenbehälter 11 ist die zum U-Rohr 6 führende Verbindungsleitung 5b an der tiefsten Stelle des Zwischenbehälters 11 angeschlossen. Das Beispiel nach Figur 2 unterscheidet sich von demjenigen nach Figur 1 außerdem dadurch, daß das Ausgleichsstandrohr 5 als eine außen an den Ausgleichsbhälter 1 in dessen oberen, den Gaspolsterraum 4 umschließenden Bereich angeschlossene Verbindungsleitung ausgeführt ist, welche mit Gefälle bis zum unteren U-Rohr 6 verlegt ist, wobei in seinem unteren Bereich der Zwischenbehälter 11 in die Leitungsführung 5-5b eingeschaltet ist.

## Patentansprüche

1. Ausgleichsbehälter-Anordnung für Flüssigkeitskreisläufe mit Volumen- und/oder Druckschwankungen, insbesondere für Kühlkreisläufe in Kernkraftwerken,
**gekennzeichnet durch** die folgenden Merkmale:
a) Der Ausgleichsbehälter (1) steht über eine bodenseitig angeschlossene Flüssigkeitsleitung (2) mit dem Flüssigkeitskreislauf in Verbindung, so daß sich im Ausgleichsbehälter (1) ein unterer Flüssigkeitsraum (3) und ein oberer Gaspolsterraum (4) ausbilden,
b) in den Gaspolsterraum (4) mündet mit seinem oberen Ende ein Ausgleichsstandrohr (5), welches in ein unterhalb des Ausgleichsbehälters (1) angeordnetes, mit einer luftabschließenden Wasservorlage (7) gefülltes U-Rohr (6) ausläuft.

2. Ausgleichsbehälter-Anordnung nach Anspruch 1, **dadurch gekennzeichnet,** daß eine Meßeinrichtung (8) zur Überwachung des Pegelstandes der Wasservorlage (7) im U-Rohr (6) und eine meßwertabhängig betätigbare Einspeiseinrichtung zur Einspeisung von Nachfüllwasser in das U-Rohr (6) über ein Einspeiseventil (9), wenn der Pegelstand unter einen Sollwert sinkt, vorgesehen sind.

3. Ausgleichsbehälter-Anordnung nach Anspruch 1 oder 2, **dadurch gekennzeichnet,** daß zwischen dem Ausgleichsstandrohr (5) und dem U-Rohr (6) ein das Gasvolumen des Ausgleichsstandrohres (5) vergrößernder Zwischenbehälter (11) angeschlossen ist.

4. Ausgleichsbehälter-Anordnung nach einem der Ansprüche 1 bis 3, **dadurch gekennzeichnet,** daß das Ausgleichsstandrohr (5) durch den Boden des Ausgleichsbehälters (1) dichtend hindurchgeführt ist und sich im Ausgleichsbehälter (1) durch den Flüssigkeitsraum (3) und den Gaspolsterraum (4) hindurch erstreckt und mit seinem offenen Ende nahe an der Deckwand des Ausgleichsbehälters (1) endet.

5. Ausgleichsbehälter-Anordnung nach einem der Ansprüche 1 bis 3, **dadurch gekennzeichnet,** daß das Ausgleichsstandrohr (5) als eine außen an den Ausgleichsbehälter (1) in dessen oberen, den Gaspolsterraum (4) umschließenden Bereich angeschlossene Verbindungsleitung ausgeführt ist, welche mit Gefälle bis zum unteren U-Rohr (6) verlegt bzw. an den Zwischenbehälter (11) angeschlossen ist.

## Claims

1. Equalizing reservoir arrangement for fluid circuits with volume and/or pressure fluctuations, especially for cooling circuits in nuclear power stations, characterized by the following features:
a) the equalizing reservoir (1) communicates via a fluid line (2) connected to the base with the fluid circuit, so that a lower fluid chamber (3) and an upper gas buffer chamber (4) form in the equalizing reservoir (1), and
b) the upper end of an equalizing riser (5) opens into the gas buffer chamber (4) and runs out into a U-bend (6) containing a water/air seal (7) and fitted beneath the equalizing reservoir (1).

2. Equalizing reservoir arrangement according to Claim 1, characterized in that a measuring instrument (8) for monitoring the level of the water seal (7) in the U-bend (6) and a feeding device, which can be activated in accordance with the measured value, for feeding replenishing water into the U-bend (6) via a feeding valve (9) when the level falls below a set value, are provided.

3. Equalizing reservoir arrangement according to Claim 1 or 2, characterized in that a buffer vessel (11), which increases the gas volume of the equalizing riser (5), is connected between the equalizing riser (5) and the U-bend (6).

4. Equalizing reservoir arrangement according to any of Claims 1 to 3, characterized in that the equalizing riser (5) is taken in a sealed manner through the base of the equalizing reservoir (1) and extends in the equalizing reservoir (1) through the fluid chamber (3) and the gas buffer chamber (4), with its open end near to the top wall of the equalizing reservoir (1).

5. Equalizing reservoir arrangement according to any of Claims 1 to 3, characterized in that the equalizing riser (5) is designed as a connecting line which is attached to the outside of the equalizing reservoir (1) in the upper region thereof, surrounding the gas buffer chamber (4), which connecting line is laid with a gradient down to the lower U-bend (6) or is connected to the buffer vessel (11).

## Revendications

1. Dispositif à récipient de compensation pour des circuits de circulation de liquide affectés de variations de volume et/ou de pression, notamment pour des circuits de refroidissement dans des centrales nucléaires,
caractérisé par les caractéristiques suivantes :
a) le récipient de compensation (1) communique avec le circuit de liquide par l'intermédiaire d'une canalisation de liquide (2) raccordée dans le fond, de sorte qu'une région inférieure (3) remplie de liquide et une région supérieure (4) formant coussin de gaz se forment dans le récipient de compensation (1),
b) dans la région formant coussin de gaz (4) débouche, par son extrémité supérieure, un conduit montant de compensation (5), qui se termine par un conduit en U (6) disposé au-dessous du récipient de compensation (1) et rempli par un tampon d'eau (7) qui réalise une fermeture vis-à-vis de l'air.

2. Dispositif à récipient de compensation suivant la revendication 1, caractérisé en ce qu'il est prévu un dispositif de mesure (8) pour surveiller le niveau du tampon d'eau (7) dans le conduit en U (6) et un dispositif d'alimentation pouvant être actionné en fonction de la valeur de mesure et servant à introduire une eau de remplissage complémentaire dans le conduit en U (6) par l'intermédiaire d'une vanne d'introduction (9), lorsque le niveau tombe au-dessous d'une valeur de consigne.

3. Dispositif à récipient de compensation suivant la revendication 1 ou 2, caractérisé par le fait qu'un récipient intermédiaire (11), qui augmente le volume de gaz du conduit montant de compensation (5), est branché entre le conduit (5) et le conduit en U (6).

4. Dispositif à récipient de compensation suivant l'une des revendications 1 à 3, caractérisé par le fait que le conduit montant de compensation (5) traverse de façon étanche le fond du récipient de compensation (1) et, dans ce dernier, traverse la région (3) remplie de liquide et la région formant coussin de gaz (4), et se termine, par son extrémité ouverte, à proximité de la paroi arrière du récipient de compensation (1).

5. Dispositif à récipient de compensation suivant l'une des revendications 1 à 3, caractérisé par le fait que le conduit montant de compensation (5) est réalisé sous la forme d'une canalisation de liaison, qui est raccordée extérieurement au récipient de compensation (1), dans la partie supérieure de ce dernier qui entoure la région formant coussin de gaz (4), et qui s'étend en position inclinée jusqu'au conduit en U inférieur (6) ou est raccordée en position inclinée au récipient intermédiaire (11).
